(19) **Europäisches Patentamt**
**European Patent Office**
**Office européen des brevets**

(11) **EP 3 920 054 A1**

(12) **EUROPEAN PATENT APPLICATION**

(43) Date of publication:
08.12.2021 Bulletin 2021/49

(51) Int Cl.:
*G06F 17/11* (2006.01)      *G06N 5/00* (2006.01)

(21) Application number: 21159207.6

(22) Date of filing: 25.02.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 05.06.2020 JP 2020098271

(71) Applicant: **FUJITSU LIMITED**
**Kanagawa 211-8588 (JP)**

(72) Inventors:
• **Parizy, Matthieu**
**Kanagawa, 211-8588 (JP)**
• **Shibasaki, Takayuki**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND PROGRAM**

(57)      An apparatus includes: a communication circuit configured to communicate with a search circuit configured to search for a solution minimizing a value of an objective function; and a processing circuit configured to: cause the search circuit to execute the search by using each of a first state and a second state as a starting point, the search being configured to change a value of a predetermined external parameter affecting an increase or decrease in the value of the objective function in a direction of promoting an increase in the value of the objective function; acquire a first state group obtained using the first state and a second state group obtained using the second state; determine a third state among unsearched states by using the first state group and the second state group; and cause the search circuit to execute the search by using the third state as the starting point.

FIG. 1

**Description**

FIELD

The embodiments discussed herein are related to an information processing apparatus, an information processing method, and a program.

BACKGROUND

There is an information processing system that calculates a multivariate optimization problem which the Neumann-type computer is not good at by replacing the optimization problem with an Ising model which is a model representing a behavior of spin of a magnetic body. The information processing system searches for a ground state in which the value of an objective function corresponding to the problem is the smallest by a Markov chain Monte Carlo method such as, for example, a simulated annealing (SA) method or a replica exchange method. The objective function may also be called an energy function, an evaluation function, or the like. The ground state corresponds to the optimal solution of the optimization problem.

For example, there is a proposal of an interactive programming device for interactively solving a nonlinear programming problem that may have a plurality of local optimal solutions, such as an arrangement plan of plant equipment. The proposed interactive programming device determines, based on the distance between a local optimal solution that is already found and a search start point, whether to execute optimization from the search departure point, thereby reducing the number of times of useless local optimization.

There is also a proposal of an optimum value search device that changes a predetermined level width that affects a search range based on a trend of an optimum value for each search step.

SUMMARY

[Technical Problem]

As described above, the solution obtained by the search by the SA method, the replica exchange method, or the like is a local solution but may not be an optimal solution. For example, there is a possibility that an optimal solution exists in an unsearched portion of the entire search space.

An object of one aspect of the embodiments is to provide an information processing apparatus, an information processing method, a program, and an information processing system that increase a possibility of reaching an optimal solution.

[Solution to Problem]

According to an aspect of the embodiments, there is provided

[Effects of Invention]

One aspect may increase a possibility of reaching an optimal solution.

BRIEF DESCRIPTION OF DRAWINGS

FIG. 1 illustrates a processing example of an information processing system according to a first embodiment;
FIG. 2 illustrates a hardware example of an information processing system according to a second embodiment;
FIG. 3 illustrates an example of functions of an information processing apparatus;
FIG. 4 illustrates an example of a neighbor state table;
FIG. 5 illustrates a first example of mapping states;
FIG. 6 illustrates a second example of mapping states;
FIG. 7 illustrates a calculation example of a starting point candidate state;
FIG. 8 is a flowchart illustrating an entire control example of the information processing system;
FIG. 9 is a flowchart illustrating an example of an intensification phase;
FIG. 10 is a flowchart illustrating an example of a diversification phase;
FIG. 11 is a flowchart illustrating a calculation example of a starting point candidate state; and

FIG. 12 illustrates an example of energy values of states in the neighborhood of a local solution.

DESCRIPTION OF EMBODIMENT(S)

Embodiments will be described below with reference to the drawings.

[First Embodiment]

A first embodiment will be described.

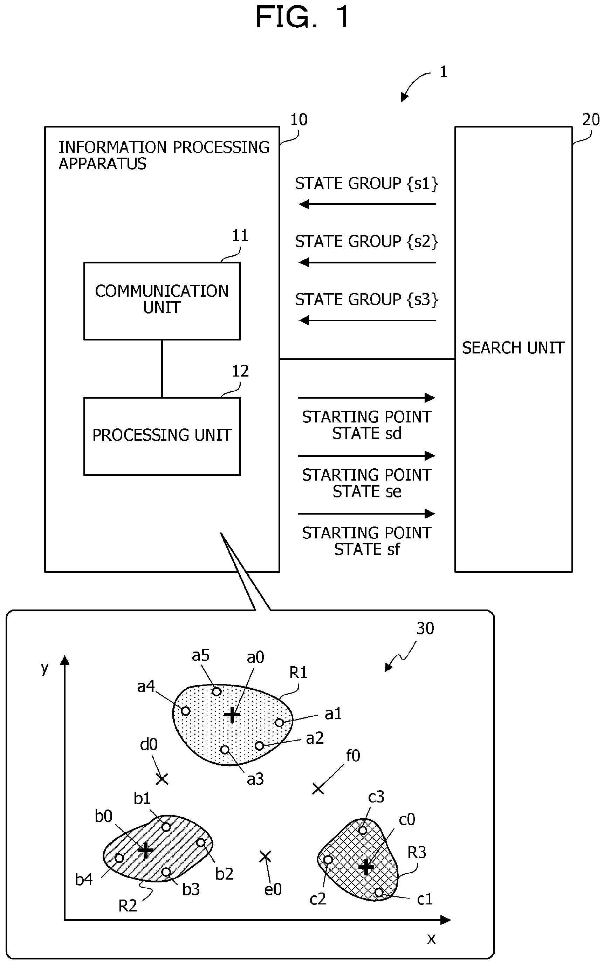

FIG. 1 illustrates a processing example of an information processing system according to the first embodiment.

An information processing system 1 searches for a solution of a combinatorial optimization problem, and outputs the solution. The information processing system 1 has an information processing apparatus 10 and a search unit 20. The information processing apparatus 10 is coupled to the search unit 20.

The search unit 20 is realized by, for example, a semiconductor integrated circuit such as a central processing unit (CPU), a graphics processing unit (GPU), a digital signal processor (DSP), an application-specific integrated circuit (ASIC), or a field-programmable gate array (FPGA). The search unit 20 may include a storage unit such as a random-access memory (RAM) or a register. For example, a search circuit realized by using an integrated circuit such as an FPGA may function as the search unit 20. The search unit 20 may include a plurality of sub-search units, and may search for a solution by using the plurality of sub-search units in parallel. In this case, the plurality of sub-search units may be arranged by being distributed to a plurality of apparatuses.

Based on an Ising-type objective function obtained by formulating a combinatorial optimization problem, the search unit 20 changes a state represented by values of a plurality of state variables included in the objective function, thereby searching for a solution that minimizes the value of the objective function, for example, an optimal solution. For searching for a solution, for example, a Markov chain Monte Carlo method such as an SA method or a replica exchange method is used.

The state is a state of the Ising model represented by the values of the plurality of state variables. The state variable is a binary variable taking a value of "0" or "1". The objective function represents an energy value corresponding to a state. The objective function is also called an energy function, an evaluation function, a Hamiltonian, or the like. The value of the objective function may be called an energy value, an evaluation value, or the like.

As described above, the combinatorial optimization problem is formulated as a problem for obtaining a solution that minimizes the value of the objective function. In this case, the solution that minimizes the value of the objective function represents a ground state of the Ising model, and corresponds to an optimal solution of the combinatorial optimization problem. An Ising-type objective function $E(x)$ is represented by, for example, Equation (1).

$$E(x) = -\sum_{\langle i,j \rangle} W_{ij} x_i x_j - \sum_i b_i x_i \qquad (1)$$

A state vector x has a plurality of state variables as elements, and represents a state of an Ising model. In the case of the problem of maximizing the value of the objective function, the sign of the objective function may be reversed.

A first term on the right side of Equation (1) is obtained by integrating a product of values of two state variables and a weighting coefficient without omission and duplication for all combinations of two state variables that are selectable from all state variables. $x_i$ is an i-th state variable. $x_j$ is a j-th state variable. $W_{ij}$ is a weight between the i-th state variable and the j-th state variable or a weighting coefficient indicating a strength of coupling.

A second term on the right side of Equation (1) is a sum of products of a bias coefficient and the value of the state variable of each of all the state variables. $b_i$ indicates the bias coefficient for the i-th state variable.

For example, "-1" of a spin in the Ising model corresponds to a value "0" of the state variable. "+1" of a spin in the Ising model corresponds to a value "1" of the state variable. Thus, the state variable may also be called a bit taking a value of 0 or 1.

Problem data including information on the objective function corresponding to the combinatorial optimization problem is input to the search unit 20 by the information processing apparatus 10. First, based on the problem data, the search unit 20 searches for a ground state by performing the search by a first search method m times (m is an integer of 2 or more) using different initial states, and obtains m local solutions as a result. In a case where the search unit includes a plurality of sub-search units, the processing speed may be increased by causing the plurality of sub-search units to execute the search in parallel. The sub-search unit may be called a replica.

In the first search method, the ground state is searched for by gradually decreasing the value of a predetermined external parameter that affects an increase or decrease in the value of the objective function. The external parameter is a parameter given to the search unit 20 separately from the problem data representing the combinatorial optimization problem. The external parameter may be, for example, a parameter indicating a predetermined physical quantity of an external environment acting on the Ising model or a parameter imitating the physical quantity. The external parameter may be a parameter for adjusting the strength of the influence of the physical quantity acting on the Ising model. Which parameter is used as the external parameter varies depending on the search method.

Examples of the first search method include the SA method, the replica exchange method, and the like. Examples of the first search methods also include a quantum annealing (QA) method and a simulated quantum annealing (SQA) method, as described later.

For example, in the SA method or the replica exchange method, a temperature value is used as the external parameter. In a case where the SA method is used, the search unit 20 searches for a ground state based on a temperature schedule given from the information processing apparatus 10. For example, in the SA method, in a search process, scheduling is performed such that the temperature value used for the search is gradually decreased from a maximum temperature value to a minimum temperature value.

In the search for the ground state, a state transition is repeatedly executed by changing a certain state variable, for example, bit. In the SA method or the replica exchange method, a Metropolis method or a Gibbs method is used to determine a probability of a transition from a certain state to a next state by changing a certain bit. The search unit 20 determines whether to allow the change of the bit, based on a comparison result between a change amount of the value of the objective function when any bit of a plurality of bits is changed and a noise value. In a case where the search unit 20 determines to allow the change, the search unit 20 causes a state transition to occur by changing the value of the bit. The noise value is obtained based on a temperature value or a random number. The larger the temperature value, the larger the amplitude of the noise value. As the amplitude of the noise value is larger, the state transition with a large increase amount of the value of the objective function is likely to be allowed. Therefore, as the temperature value is larger, the value of the objective function is promoted to be increased. For example, a state transition in which the value of the objective function is increased relatively significantly is likely to occur.

The search unit 20 outputs the m local solutions obtained as a result of the search by the first search method to the information processing apparatus 10. The local solution is a solution that minimizes the value of the objective function among the solutions reached by the search by the first search method. By executing the search m times (m is an integer of 2 or more), m local solutions are obtained.

The search unit 20 does not always search all states represented by the plurality of state variables, for example, the entire search space and output a solution. Therefore, the solution output by the search unit 20 is the locally best solution, for example, the local solution. On the other hand, the local solution is not necessarily the globally best solution, for example, the optimal solution. The information processing apparatus 10 causes the search unit 20 to perform a re-search based on the local solution, thereby providing a function of increasing the possibility of obtaining the optimal solution.

The information processing apparatus 10 has a communication unit 11 and a processing unit 12.

The communication unit 11 communicates with the search unit 20. The communication unit 11 is realized by an IO interface that performs input/output (IO) to/from a memory of the search unit 20 or a memory in the information processing apparatus 10 referred to by the search unit 20. In a case where the search unit 20 is realized by another device coupled via a network, the communication unit 11 may be realized by a communication interface such as a network interface card (NIC) coupled to the network.

The processing unit 12 may include integrated circuits such as a CPU, a DSP, an ASIC, and an FPGA. The processing unit 12 may be a processor that executes a program. The "processor" referred to herein may also include a set of a plurality of processors (multiprocessor). The processing unit 12 communicates with the search unit 20 via the communication unit 11.

Although not illustrated, the information processing apparatus 10 includes a storage unit such as a RAM or an HDD that stores data such as states used for the processing of the processing unit 12.

The processing unit 12 sets a first state and a second state in the search unit 20 via the communication unit 11. For example, the processing unit 12 sequentially sets the first state and the second state, and causes the search unit 20 to execute a search by a second search method with each of the first state and the second state as a starting point. In a case where the search unit 20 has a plurality of sub-search units, the first state and the second state may be simultaneously set in two of the plurality of sub-search units. Each of the first state and the second state is two local solutions obtained by the search by the first search method at a stage immediately after the search by the first search method is ended.

The search by the second search method is a search that changes the value of the external parameter in a direction that promotes an increase in the value of the objective function. For example, the external parameter has a minimum value that the external parameter may have as an initial value. The processing unit 12 instructs the search unit 20 to increase the value of the external parameter each time the state is changed a predetermined number of times or a predetermined period elapses. The increase width of the external parameter per one time may be a fixed width, or may be gradually increased with a logarithmic width such as 0.1, 1, 10, 100, 1000, and the like. As described above, the external parameter is, for example, the temperature value. Even in a case where the search unit 20 includes the plurality of sub-search units and the replica exchange method is used as the first search method, in the search by the second search method, replica exchange between the sub-search units, for example, exchange of temperature values or states is not performed, and a search is independently performed by each sub-search unit.

The search by the second search method is to search for a state in the neighborhood of the starting point. For example, as described above, the state transition is progressed while the temperature value is increased stepwise from the minimum temperature value every certain number of state transitions, and the states in the neighborhood of the starting point are sampled. For example, a state in which the Hamming distance from the starting point is less than a certain value or a state that is sampled when the increase amount of the temperature value from the minimum temperature value is less than a certain value is a state in the neighborhood of the starting point.

The processing unit 12 acquires a first state group obtained based on the first state and a second state group obtained based on the second state in the search process by the second search method. For example, in a case where three local solutions are set as starting points, the processing unit 12 acquires three state groups {s1}, {s2}, and {s3} from the search unit 20. The processing unit 12 stores the state groups {s1}, {s2}, and {s3} in the storage unit of the information processing apparatus 10 in association with the states as the starting points of the state groups {s1}, {s2}, and {s3}, respectively. The state groups {s1}, {s2}, and {s3} may include the state as the starting point. For example, the state group {s1} may be considered as an example of the first state group, and the state group {s2} may be considered as an example of the second state group.

Based on the acquired first state group and second state group, the processing unit 12 determines a third state to be used as a new starting point, among the unsearched states. For example, the operation is performed in the following manner.

The processing unit 12 generates map information indicating relationships between states included in each of the first state group and the second state group. The map information is, for example, information obtained by mapping relationships between states of a sampled state group (including the starting point) to an n-dimensional (n is an integer of 2 or more) coordinate system. The relationship between the states represents a degree of similarity between two states, for example, a similarity degree. For example, the similarity degree is represented by the Hamming distance between two states. In this case, the smaller the Hamming distance, the higher the similarity degree between two states. Alternatively, the similarity degree may be a distance $\{\Sigma(p_{2i}-p_{1i})^{\wedge}2\}^{\wedge}(1/2)$ between a plurality of first parameter values $p_{11}$, $p_{12}$, and the like in the combinatorial optimization problem represented by one state and a plurality of second parameter values $p_{21}$, $p_{22}$, and the like represented by the other state. In this case, the smaller the distance, the higher the similarity degree between two states. The similarity degree between the states may be evaluated on a scale different from these examples.

The processing unit 12 may generate map information having the number of dimensions smaller than the number of dimensions of the state, for example, the number of the plurality of state variables. In this case, the map information is generated such that the similarity degree between any two states is maintained. Multidimensional scaling (MDS) may be used as a method of generating such map information. The following Document 1 may be referred to for the MDS.

Document 1: J.B.Kruskal, "Multidimensional scaling by optimizing goodness of fit to a nonmetric hypothesis", Psychometrika. 29 (1), 1964, pp. 1-27.

As an example, map information 30 indicates a case where a relationship between states is represented by a two-dimensional coordinate system. The coordinate system has an x axis and a y axis. The map information 30 includes information on xy coordinates corresponding to the state as the starting point and the state sampled for the starting point. The similarity relationship between two states is represented by a distance between coordinates corresponding to one state and coordinates corresponding to the other state plotted in the coordinate system.

For example, the map information 30 includes coordinates a0 to a5, b0 to b4, and c0 to c3.

The coordinates a0 correspond to a first starting point of the search by the second search method. Each of the coordinates a1 to a5 corresponds to any state included in the state group {s1}.

The coordinates b0 correspond to a second starting point of the search by the second search method. Each of the coordinates b1 to b4 corresponds to any state included in the state group {s2}.

The coordinates c0 correspond to a third starting point of the search by the second search method. Each of the coordinates c1 to c3 corresponds to any state included in the state group {s3}.

The processing unit 12 determines the third state among the unsearched states based on the map information and the correspondence relationship between the starting point and the state group.

For example, the processing unit 12 specifies the coordinates a0 corresponding to the first starting point and the coordinates a1 to a5 corresponding to the state group {s1} searched from the first starting point. The processing unit 12 obtains a figure surrounding all coordinates corresponding to the first starting point and the state group {s1}. The figure may be, for example, a minimum bounding polygon or a minimum bounding rectangle surrounding the coordinates a0 to a5. A figure R1 is an example of a figure surrounding all coordinates corresponding to the state group {s1} including the first starting point.

The processing unit 12 specifies the coordinates b0 corresponding to the second starting point and the coordinates b1 to b4 corresponding to the state group {s2} searched from the second starting point. The processing unit 12 obtains a figure R2 surrounding all coordinates corresponding to the second starting point as the starting point and the state group {s2}.

The processing unit 12 specifies the coordinates c0 corresponding to the third starting point and the coordinates c1 to c3 corresponding to the state group {s3} searched from the third starting point as the starting point. The processing unit 12 obtains a figure R3 surrounding all coordinates corresponding to the third starting point as the starting point and the state group {s3}.

In this case, the figures R1, R2, and R3 are estimated to be regions corresponding to searched partial spaces among the entire search space. Therefore, if there is an optimal solution other than the solutions that have already been obtained, it is estimated that there is a high possibility that the optimal solution exists in the unsearched partial space corresponding to the outside of the regions among the entire search space. Thus, the processing unit 12 obtains the third state that does not belong to the figures R1, R2, and R3 based on the states belonging to each of the figures R1, R2, and R3.

For example, the processing unit 12 may obtain the third state which has an appropriate distance away from the searched partial spaces corresponding to the figures R1, R2, and R3, by the following method.

The processing unit 12 compares the respective states of the state group {s1} including the state as the starting point corresponding to the figure R1, and classifies the bits at the same position of the respective states of the state group {s1} into a bit of consistently 1, a bit of consistently 0, and a bit of 1 or 0. A classification result for the state group {s1} is referred to as a first bit pattern.

The processing unit 12 compares the respective states of the state group {s2} including the state as the starting point corresponding to the figure R2, and classifies the bits at the same position of the respective states of the state group {s2} into a bit of consistently 1, a bit of consistently 0, and a bit of 1 or 0. A classification result for the state group {s2} is referred to as a second bit pattern.

The processing unit 12 compares the respective states of the state group {s3} including the state as the starting point corresponding to the figure R3, and classifies the bits at the same position of the respective states of the state group {s3} into a bit of consistently 1, a bit of consistently 0, and a bit of 1 or 0. A classification result for the state group {s3} is referred to as a third bit pattern.

For example, the processing unit 12 generates candidate states that are candidates for the third state for the two state groups {s1} and {s2} as follows. First, for the bits that are common in both of the first and second bit patterns to be consistently 1 or consistently 0, the processing unit 12 also sets a bit of the candidate state corresponding to the bits to the same value. Second, for the bit which is consistently 1 in one of the first and second bit patterns and is consistently 0 in the other of the first and second bit patterns, the processing unit 12 makes bits of the candidate states corresponding to the bits have values of 1 and 0 in half. Third, in a case where neither of the first and second criterions is met, the processing unit 12 randomly determines the corresponding bit of the candidate state to be 1 or 0. The processing unit 12 maps the candidate state obtained in this manner to the map information 30, and decides the candidate state as the third state in a case where the coordinates corresponding to the candidate state do not belong to any of the figures R1, R2, and R3.

In the map information 30, coordinates d0, e0, and f0 that do not belong to any of the figures R1, R2, and R3 are exemplified. The coordinates d0 are coordinates corresponding to a state sd obtained for the state groups {s1} and {s2}. The coordinates e0 are coordinates corresponding to a state se obtained for the state groups {s2} and {s3}. The coordinates f0 are coordinates corresponding to a state sf obtained for the state groups {s3} and {s1}. Each of the states sd, se, and sf is an example of the third state.

The processing unit 12 causes the search unit 20 to execute a search by using the third state as the starting point. For example, the processing unit 12 outputs the state sd to the search unit 20, causes the search unit 20 to execute a search by the second search method by using the state sd as a starting point, for example, a starting point state, and acquires a state obtained by the search. The processing unit 12 outputs the state se to the search unit 20, causes the search unit 20 to execute a search by the second search method by using the state se as a starting point, and acquires a state obtained by the search. The processing unit 12 outputs the state sf to the search unit 20, causes the search unit 20 to execute a search by the second search method by using the state sf as a starting point, and acquires a state obtained by the search.

In a case where a better state than already obtained, for example, a solution having a smaller value of the objective function than the existing solution is obtained as a result of the re-search by the search unit 20, the processing unit 12 adopts the newly obtained solution, and outputs the finally obtained best solution to the outside. The processing unit 12 may acquire a newly obtained state group from the search unit 20 for each starting point, repeatedly execute the above-described procedure for a predetermined time or a predetermined number of times based on the state group, and cause the search unit 20 to search for a better solution.

In the above example, the three states sd, se, and sf are illustrated as the third states, but the number of third states may be one, or may be two, or four or more. For example, the processing unit 12 may obtain one state sd as the third state based on the figure R1 corresponding to the first state group and the figure R2 corresponding to the second state group.

With the information processing system 1, a search is executed which uses each of the first state and the second state as a starting point and which changes the value of a predetermined external parameter that affects an increase or decrease in the value of the objective function, in a direction that promotes an increase in the value of the objective function. The first state group obtained based on the first state and the second state group obtained based on the second state are acquired in the search process. The third state is determined among the unsearched states, based on the first state group and the second state group. The search is executed with the third state as a starting point.

Thus, the possibility of reaching an optimal solution may be increased. The solution may be efficiently searched for by focusing on the unsearched part among the entire search space, and the optimal solution may be obtained in a short time. The solution performance for the combinatorial optimization problem may be improved.

The search unit 20 may be realized by hardware that executes the SA method, the replica exchange method, or the like by using a digital circuit, or may be realized by hardware that executes the QA method. The hardware that executes the SA method, the replica exchange method, the QA method, or the like may be called an optimization apparatus. The search unit 20 that executes the SA method, the replica exchange method, or the SQA method may be realized by a processor such as a CPU included in the information processing apparatus 10.

In the QA method or the SQA method, a transverse magnetic field term is added to the Hamiltonian corresponding to the objective function. For example, the Hamiltonian H(t) including the transverse magnetic field term is expressed as $H(t) = H_0 + \Gamma(t)H_1$.

t is time. $H_0$ is the Hamiltonian of the Ising model. $H_1$ is the Hamiltonian representing a transverse magnetic field. $\Gamma(t)H_1$ is the transverse magnetic field term. $\Gamma(t)$ in the transverse magnetic field term $\Gamma(t)H_1$ is a coefficient representing the strength of the influence of the transverse magnetic field in the objective function. $\Gamma(t)$ may be said to be a coefficient representing the strength of the transverse magnetic field.

In the QA method or the SQA method, by decreasing the coefficient $\Gamma(t)$ in the transverse magnetic field term over time, control is performed such that the influence of the transverse magnetic field on the Ising model is decreased. For example, in the QA method or the SQA method, the coefficient $\Gamma(t)$ included in the transverse magnetic field term is used as the external parameter. Therefore, in a case where the QA method or the SQA method is used as the first search method, it is considered that, in the second search method, the value of the coefficient $\Gamma(t)$ is gradually increased over time from a relatively small value so that the influence of the transverse magnetic field is controlled to be gradually increased, and the search unit 20 executes the search.

[Second Embodiment]

Next, a second embodiment will be described.

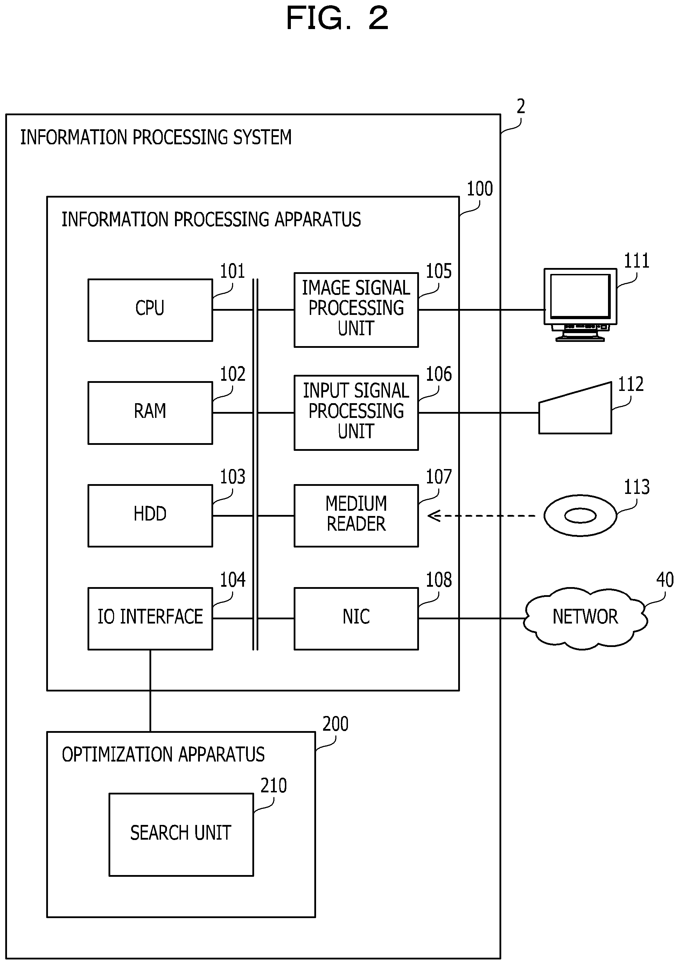

FIG. 2 illustrates a hardware example of an information processing system according to the second embodiment.

An information processing system 2 includes an information processing apparatus 100 and an optimization apparatus 200.

The information processing apparatus 100 has a CPU 101, a RAM 102, a hard disk drive (HDD) 103, an IO interface 104, an image signal processing unit 105, an input signal processing unit 106, a medium reader 107, and an NIC 108. The CPU 101 is an example of the processing unit 12 of the first embodiment. The IO interface 104 is an example of the communication unit 11 of the first embodiment.

The CPU 101 is a processor that executes a command of a program. The CPU 101 loads at least a part of a program or data stored in the HDD 103 into the RAM 102, and executes the program. The CPU 101 may include a plurality of processor cores. The information processing apparatus 100 may have a plurality of processors. A set of the plurality of processors may be referred to as a "multiprocessor" or simply a "processor".

The RAM 102 is a volatile semiconductor memory that temporarily stores the program executed by the CPU 101 and data used for the operation by the CPU 101. The information processing apparatus 100 may include memories of types other than the RAM, and may include a plurality of memories.

The HDD 103 is a non-volatile storage device that stores the programs of an operating system (OS) and software such as middleware and application software, and data. The information processing apparatus 100 may include other types of storage devices such as a flash memory and a solid-state drive (SSD), and may include a plurality of non-volatile storage devices.

The IO interface 104 is coupled to the optimization apparatus 200, and inputs and outputs data to and from the optimization apparatus 200 in accordance with the command from the CPU 101. For example, the IO interface 104 writes data of the RAM 102 to a register or a memory of the optimization apparatus 200, or reads the data from the optimization apparatus 200 and writes the data to the RAM 102, in accordance with a command from the CPU 101. As the IO interface 104, for example, a Peripheral Component Interconnect-Express (PCI-e) or the like is used.

The image signal processing unit 105 outputs an image to a display 111 coupled to the information processing apparatus 100 in accordance with a command from the CPU 101. As the display 111, any type of display such as a cathode ray tube (CRT) display, a liquid crystal display (LCD), a plasma display, or an organic electro-luminescence (OEL) display may be used.

The input signal processing unit 106 acquires an input signal from an input device 112 coupled to the information processing apparatus 100, and outputs the input signal to the CPU 101. As the input device 112, a pointing device such as a mouse, a touch panel, a touchpad, or a trackball, a keyboard, a remote controller, a button switch, or the like may be used. A plurality of types of input devices may be coupled to the information processing apparatus 100.

The medium reader 107 is a reading device that reads programs and data recorded in a recording medium 113. As the recording medium 113, for example, a magnetic disk, an optical disk, a magneto-optical (MO) disk, a semiconductor memory, or the like may be used. The magnetic disk includes a flexible disk (FD) or an HDD. The optical disk includes a compact disc (CD) or a digital versatile disc (DVD).

The medium reader 107 copies, for example, the program and data read from the recording medium 113 to another recording medium such as the RAM 102 or the HDD 103. The read program is executed by, for example, the CPU 101. The recording medium 113 may be a portable recording medium, or may be used to distribute the program and data. The recording medium 113 and the HDD 103 may be referred to as a computer-readable recording medium.

The NIC 108 is an interface that is coupled to a network 40 and communicates with another computer via the network 40. The NIC 108 is coupled to a communication device such as a switch or a router included in the network 40, by a cable, for example.

The optimization apparatus 200 is an accelerator that performs, with hardware, a ground state search using the SA method or the replica exchange method, based on the objective function obtained by formulating the combinatorial optimization problem. The optimization apparatus 200 is realized by using, for example, an integrated circuit such as an FPGA. The optimization apparatus 200 may also be called a Boltzmann machine, an Ising machine, an Ising optimization apparatus, or the like. In the second embodiment, the objective function may be referred to as an energy function, and the value of the objective function may be referred to as an energy value.

The optimization apparatus 200 includes a search unit 210. The search unit 210 searches for the ground state using the SA method, the replica exchange method, or the like.

The CPU 101 sets a temperature value used for the search, in the search unit 210. For example, the search unit 210 may search for the ground state by the SA method according to a temperature schedule set by the CPU 101. The search unit 210 may search for the ground state by the replica exchange method using a plurality of temperature values, instead of the SA method. As described later, the search unit 210 may perform a search at a fixed temperature set by the CPU 101.

The function of the search unit 210 that executes the SA method, the replica exchange method, or the like may be realized by the CPU 101 or a CPU of another information processing apparatus coupled to the network 40 executing predetermined software. The information processing apparatus 100 may be a computer.

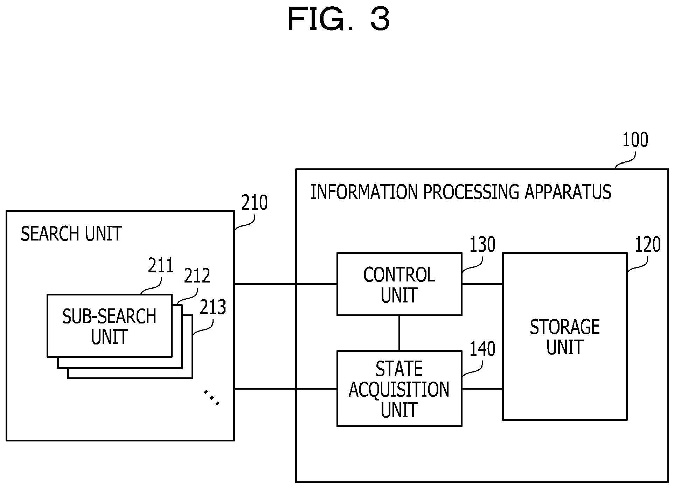

FIG. 3 illustrates an example of functions of the information processing apparatus.

The information processing apparatus 100 has a storage unit 120, a control unit 130, and a state acquisition unit 140. As the storage unit 120, a storage area of the RAM 102 or the HDD 103 may be used. The control unit 130 and the state acquisition unit 140 are realized by the CPU 101 executing a program stored in the RAM 102.

The storage unit 120 stores a neighbor state table. The neighbor state table includes states in the neighborhood of a starting point, which are re-searched with a certain state as the starting point. The term "neighbor" means, for example, that the Hamming distance with respect to the state as the starting point is less than a certain value. The term "re-search" means a stage of further performing a search based on the local solution searched by the SA method or the replica exchange method.

The storage unit 120 holds the state obtained by the search by the search unit 210 together with the energy value. The storage unit 120 holds a state having the smallest energy value among the obtained states, as a best solution.

The control unit 130 sets the problem data of the combinatorial optimization problem, in the search unit 210. The control unit 130 sets, in the search unit 210, an initial state or a temperature schedule of the search by the SA method or the replica exchange method, a starting point state or a temperature value of the re-search, a sampling rate of the state in the re-search, and the like. The temperature value is an example of a value of the external parameter of the first embodiment.

The control unit 130 causes the search unit 210 to first search for a solution by the SA method or the replica exchange method. When a plurality of local solutions are acquired by the SA method or the replica exchange method, the control unit 130 causes the search unit 210 to execute re-search using the plurality of local solutions. In the re-search, the control unit 130 controls the search unit 210 such that the temperature value is gradually increased from a low value to a high value.

The re-search includes two processing stages called an intensification phase and a diversification phase. In the intensification phase, a process of sampling neighbor states from the starting point state is performed. In the diversification phase, a process of generating a new starting point state is performed based on the sampled neighbor states. The following Document 2 may be referred to for the intensification phase and the diversification phase.

Document 2: M.Morita, H.Ochiai, K.Tamura and K.Yasuda, "Multipoint Search Combinatorial Optimization Method Based on Neighborhood Search Using Evaluation of Big Valley Structure", 2015 IEEE International Conference on Systems, Man, and Cybernetics, Kowloon, 2015, pp. 2835-2840.

The state acquisition unit 140 acquires the state obtained by the search unit 210 and the energy value corresponding to the state, and supplies the state and the energy value to the control unit 130. The state acquisition unit 140 may store the acquired state and energy value in the storage unit 120. The state acquisition unit 140 updates the best solution stored in the storage unit 120 based on the obtained state and energy value.

The search unit 210 has sub-search units 211, 212, 213, and the like. Each of the sub-search units 211, 212, 213, and the like searches for the ground state by the SA method, the replica exchange method, or the like for the same combinatorial optimization problem based on the energy function represented by Equation (1) described above. Each of the sub-search units 211, 212, 213, and the like may be called a replica, a replica circuit, or the like. The sub-search units 211, 212, 213, and the like may be arranged by being distributed to a plurality of apparatuses. For example, each of the sub-search units 211, 212, 213, and the like may be realized by an individual Ising machine. Each of the sub-search units 211, 212, 213, and the like has a memory or a register that holds a state, an energy value, or the like obtained by its own search.

In a case where the value of the state variable $x_i$ in Equation (1) is changed to become $1-x_i$, an increase amount of the state variable $x_i$ may be represented as $\delta x_i = (1 - x_i) - x_i = 1 - 2x_i$. Therefore, a change amount $\Delta E_i$ of the energy value accompanying the change in the state variable $x_i$ for the energy function $E(x)$ is represented by Equation (2).

$$\Delta E_i = E(x)\Big|_{x_i \to 1 - x_i} - E(x)$$
$$= -\delta x_i \left( \sum_j W_{ij} x_j + b_i \right)$$
$$= -\delta x_i h_i$$
$$= \begin{cases} -h_i & for \ x_i = 0 \to 1 \\ +h_i & for \ x_i = 1 \to 0 \end{cases} \tag{2}$$

$h_i$ is called a local field, and is represented by Equation (3).

$$h_i = \sum_j W_{ij} x_j + b_i \tag{3}$$

A change amount $\delta h_i^{(j)}$ of the local field $h_i$ when the state variable $x_j$ is changed is represented by Equation (4).

$$\delta h_i^{(j)} = \begin{cases} +W_{ij} & for \ x_j = 0 \to 1 \\ -W_{ij} & for \ x_j = 1 \to 0 \end{cases} \tag{4}$$

Each of the sub-search units 211, 212, 213, and the like holds the local field $h_i$ in its own memory or register, and adds the change amount $\delta h_i^{(j)}$ to $h_i$ when the value of the state variable $x_j$ is changed, thereby obtaining $h_i$ corresponding to a state after the bit inversion.

It is considered that, for example, gradient descent is used for searching for the ground state for minimizing the energy value. However, with gradient descent, once the search unit is stuck at a local solution, it is difficult to escape from the local solution.

In view of this, in the sub-search units 211, 212, 213, and the like, a Metropolis method or a Gibbs method is used to determine whether to allow a state transition (change in a value of the state variable $x_i$) in which the change amount of the energy value becomes $\Delta E_i$ in the search of the ground state. For example, in the neighbor search of searching for a transition from a certain state to another state with an energy value lower than that of the certain state, the sub-search units 211, 212, 213, and the like stochastically allow a transition to not only a state where the energy value is decreased but also to a state where the energy value is increased. For example, a probability $A(\Delta E)$ that accepts a change in a value of a state variable of the change amount $\Delta E$ of the energy value is represented by Equation (5).

$$A(\Delta E) = \begin{cases} \min\left[1, \exp(-\beta \cdot \Delta E)\right] & Metropolis \\ 1/\left[1 + \exp\left(\beta \cdot \Delta E\right)\right] & Gibbs \end{cases} \qquad (5)$$

Here, an inverse temperature $\beta$ is a reciprocal number ($\beta = 1/T$) of a temperature value T (T > 0). A min operator indicates that a minimum value of an argument is taken. Therefore, for example, in a case where the Metropolis method is used and the change amount $\Delta E$ of the energy value satisfies Equation (6) for a uniform random number u (0 < u ≤ 1), the change in the value of the state variable is allowed.

$$\ln(u) \times T \le -\Delta E \qquad (6)$$

The control unit 130 may perform the search by the SA method or the replica exchange method by using the sub-search units 211, 212, 213, and the like in parallel.

However, in a case where the sub-search units 211, 212, 213, and the like search for the local solution by the replica exchange method, in the re-search, the replica exchange between the sub-search units, for example, the exchange of the temperature value or the state is not performed, and the search is independently performed by each sub-search unit.

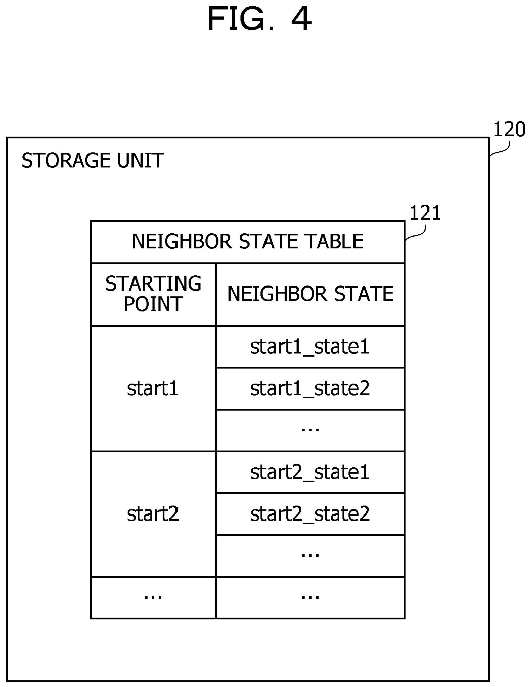

FIG. 4 illustrates an example of the neighbor state table.

A neighbor state table 121 is stored in the storage unit 120. The neighbor state table 121 indicates a correspondence relationship between a starting point and a state group obtained by the search from the starting point. The neighbor state table 121 includes items of the starting point and the neighbor state.

The state of the starting point is registered in the item of the starting point. In the item of the neighbor state, a neighbor state sampled by the search from the starting point in the intensification phase of the re-search is registered.

For example, in the neighbor state table 121, records of a starting point "start1", and neighbor states "start1_state1", "start1_state2", and the like are registered. The records indicate that a state group {"start1_state1", "start1_state2", and the like} is sampled as the neighbor states with respect to the state as the starting point indicated by "start1".

In the neighbor state table 121, records indicating another starting point and neighbor states corresponding to the other starting point are also registered.

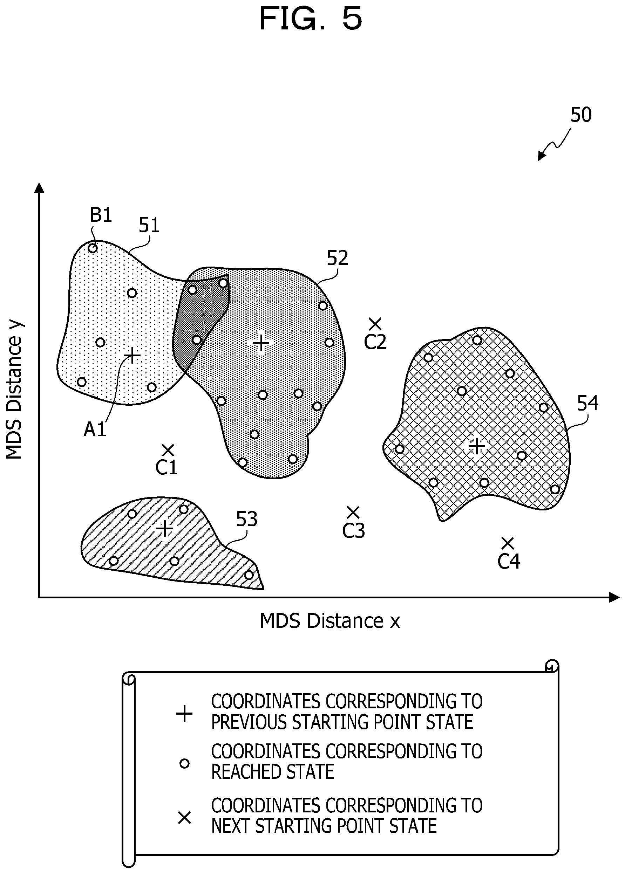

FIG. 5 illustrates a first example of mapping states.

Each state recorded in the neighbor state table 121 is mapped to coordinates in a predetermined coordinate system by using the method of the MDS described above. The number of dimensions of the coordinate system of the mapping destination may be different from the number of dimensions of the state. For example, in a case where the number of dimensions of the coordinate system of the mapping destination is smaller than the number of dimensions of the state, the dimensions of the state are compressed to the dimensions of the mapping destination. The number of dimensions of the coordinate system of the mapping destination may be two or more.

A coordinate system 50 is an example of a two-dimensional coordinate system as the mapping destination by the MDS. The coordinate system 50 has, for example, an x axis and a y axis that are orthogonal to each other. The distance (MDS distance) between two (x, y) coordinates in the coordinate system 50 reflects the similarity degree between the two states corresponding to the two coordinates, which is evaluated on a predetermined scale. As the scale for evaluating the similarity degree, for example, a Hamming distance between two states or a distance between two parameter groups in the combinatorial optimization problem represented by two states may be used. However, another scale may be used to evaluate the similarity degree between the states. Information on the coordinates corresponding to each state in the coordinate system 50 is an example of the map information 30 of the first embodiment.

In this manner, by mapping each state to the coordinate system 50 by the MDS, it is possible to more easily evaluate how much the respective states are separated from each other and how much it is difficult to reach another state from a certain state, based on the distance between the coordinates. A z axis may be further added to the coordinate system 50, and the z axis may be expressed as an energy value.

In the coordinate system 50, marks representing coordinates are illustrated. A plus (+) mark (for example, a mark on coordinates A1) indicates coordinates corresponding to the previous starting point state in the re-search. A circle (O) mark (for example, a mark on coordinates B1) indicates coordinates corresponding to the neighbor state obtained by the re-search. A cross (X) mark (a mark on each of the coordinates C1 to C4) indicates coordinates corresponding to the next starting point state in the re-search.

In the coordinate system 50, polygons 51, 52, 53, and 54 are further illustrated. Each of the polygons 51, 52, 53, and 54 is a figure which has three or more vertices and surrounds the previous starting point state and neighbor states searched from the starting point state by the re-search. Each of the polygons 51, 52, 53, and 54 may be a minimum bounding polygon or a minimum bounding rectangle (rectangle). For the minimum bounding rectangle, the URL "https://en.wikipedia.org/wiki/Minimum_boundig_rectangle" (searched on May 21, 2020) may be referred to. "WIKIPEDIA" is a registered trademark.

For example, parts of a plurality of figures may overlap each other as in the polygons 51 and 52.

The polygons 51, 52, 53, and 54 are estimated to be regions corresponding to searched partial spaces among the entire search space. Therefore, if there is an optimal solution other than the solutions that have already been obtained, it is estimated that there is a high possibility that the optimal solution exists in the unsearched partial space corresponding to the outside of the regions among the entire search space. The control unit 130 obtains the next starting point state that does not belong to the polygons 51, 52, 53, and 54 based on the states belonging to each of the polygons 51, 52, 53, and 54.

For example, the control unit 130 obtains the next starting point state corresponding to the coordinates C1 for the polygons 51 and 52. The control unit 130 obtains the next starting point state corresponding to the coordinates C2 for the polygons 52 and 54. The control unit 130 obtains the next starting point state corresponding to the coordinates C3 for the polygons 53 and 54. The control unit 130 obtains the next starting point state corresponding to the coordinates C4 for the polygon 54 and another polygon (not illustrated).

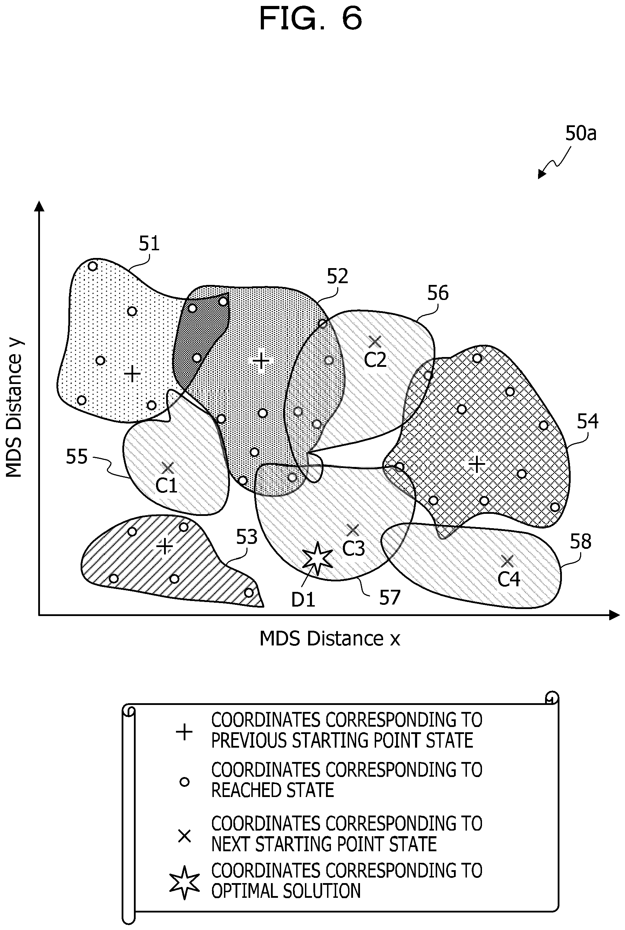

FIG. 6 illustrates a second example of mapping states.

In a coordinate system 50a, polygons 55, 56, 57, and 58 are added to the coordinate system 50. The polygons 55, 56, 57, and 58 are polygons surrounding state groups which are sampled by the re-search from the next starting point states corresponding to the coordinates C1, C2, C3, and C4. A star mark in the coordinate system 50a indicates coordinates D1 corresponding to the optimal solution.

The control unit 130 may display an image as illustrated in FIGs. 5 and 6 in which the energy value of the z axis is added to the coordinate systems 50 and 50a or the coordinate systems 50 and 50a on the display 111, or may display the image on another device via the network 40. Thus, the user may monitor the search status.

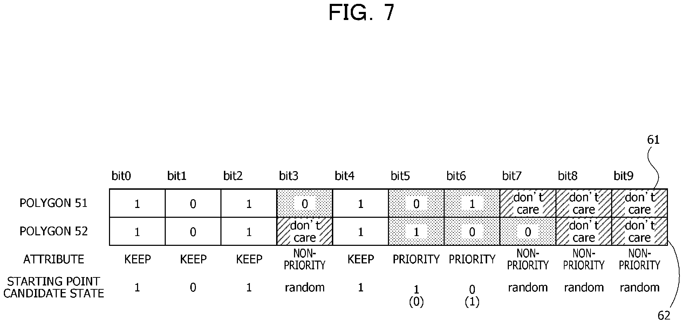

FIG. 7 illustrates a calculation example of a starting point candidate state.

FIG. 7 illustrates an example in which starting point candidate states are calculated for a state group corresponding to a coordinate group belonging to the polygon 51 and a state group corresponding to a coordinate group belonging to the polygon 52.

The control unit 130 compares bits at the same position in the respective states corresponding to the coordinate group belonging to the polygon 51 with each other to generate a bit pattern 61. In the bit pattern 61, at each position, in a case where the bit at the position is consistently 1, the position is classified into the equivalent bit (1), and in a case where the bit at the position is consistently 0, the position is classified into the equivalent bit (0). In a case where the bit at the position is 1 or 0, the bit is classified into a difference bit ("don't care" in the drawing).

For example, the bit pattern 61 indicates that, for the respective states corresponding to the polygon 51, respective bits at 0-th to 9th positions (bit0 to bit9) are classified as follows. The 0-th, 2nd, 4th, and 6th bits are the equivalent bits (1). The 1st, 3rd, and 5th bits are equivalent bits (0). The 7th, 8th, and 9th bits are difference bits.

Similarly, the control unit 130 generates a bit pattern 62 for the polygon 52. For example, the bit pattern 62 indicates that, for the respective states corresponding to the polygon 52, respective bits at 0-th to 9th positions (bit0 to bit9) are classified as follows. The 0-th, 2nd, 4th, and 5th bits are equivalent bits (1). The 1st, 6th, and 7th bits are equivalent bits (0). The 3rd, 8th, and 9th bits are difference bits.

The control unit 130 generates, based on the bit patterns 61 and 62, a starting point candidate state as follows so that the center of the unsearched section is easily targeted.

In a case where the bits at the same position in the bit patterns 61 and 62 are both equivalent bits (1) or both equivalent bits (0), the control unit 130 sets the attribute of the bit at the position of the starting point candidate state to "keep". In the example of the bit patterns 61 and 62, the bits at each of the 0-th, 1st, 2nd, and 4th positions are both equivalent bits (1) or both equivalent bits (0), and thus the attribute is set to "keep".

In a case where one of the bits at the same position in the bit patterns 61 and 62 is the equivalent bit (1) and the other thereof is the equivalent bit (0), the control unit 130 sets the attribute of the bit at the position of the starting point candidate state to a "priority relinking target". In FIG. 7, the priority relinking target is abbreviated as "priority". In the example of the bit patterns 61 and 62, one of the bits at each of the 5th and 6th positions is the equivalent bit (1) and the other thereof is the equivalent bit (0), and thus the attribute is set as the priority relinking target.

In a case where at least one of the bits at the same position in the bit patterns 61 and 62 is the difference bit, the control unit 130 sets the attribute of the bit at the position of the starting point candidate state to a "non-priority relinking target". In FIG. 7, the non-priority relinking target is abbreviated as "non-priority". In the example of the bit patterns 61 and 62, at least one of the bits at each of the 3rd, 7th, 8th, and 9th positions is the difference bit, and thus the attribute is set as the non-priority relinking target.

The control unit 130 determines the value of the bit at each position of the starting point candidate state in accordance with the attribute of the bit at the position. For example, in a case where the attribute is "keep", the control unit 130 sets the bit at the corresponding position of the starting point candidate state to the same value as the bits at the same position in the bit patterns 61 and 62. For example, for the bit patterns 61 and 62, the control unit 130 sets the 0-th, 2nd, and 4th bits of the starting point candidate state to 1 and sets the 1st bit to 0.

In a case where the attribute is the priority relinking target, the control unit 130 determines the value of the bit at the corresponding position of the starting point candidate state such that the plurality of bits as the priority relinking target have approximately the same number of 1s and 0s. For example, when attention is paid only to the bits as the priority relinking target, the Hamming distance between the bit pattern 61 and the starting point candidate state is equal to the Hamming distance between the bit pattern 62 and the starting point candidate state. For example, in the example of the bit patterns 61 and 62, the control unit 130 sets the 6th bit of the starting point candidate state to 0 when the control unit 130 sets the 5th bit of the starting point candidate state to 1. The control unit 130 sets the 6th bit of the starting point candidate state to 1 when the control unit 130 sets the 5th bit of the starting point candidate state to 0.

In a case where the attribute is the non-priority relinking target, the control unit 130 randomly determines the bit at the corresponding position of the starting point candidate state to 1 or 0. For example, for the bit patterns 61 and 62, the control unit 130 randomly determines the values of the 3rd, 7th, 8th, and 9th bits of the starting point candidate state to 1 or 0.

The control unit 130 plots the generated starting point candidate states in the coordinate system 50. For example, the control unit 130 obtains coordinates in the coordinate system 50, which correspond to the starting point candidate state, by the method of the MDS. In a case where the plotted coordinates corresponding to the starting point candidate state are not included in any polygon, the control unit 130 decides the starting point candidate state as the next starting point state.

By generating the next starting point state in this manner, it becomes easy to generate a starting point state that is appropriately away from the searched part, in the unsearched part of the entire search space.

Next, a processing procedure of the information processing system 2 will be described.

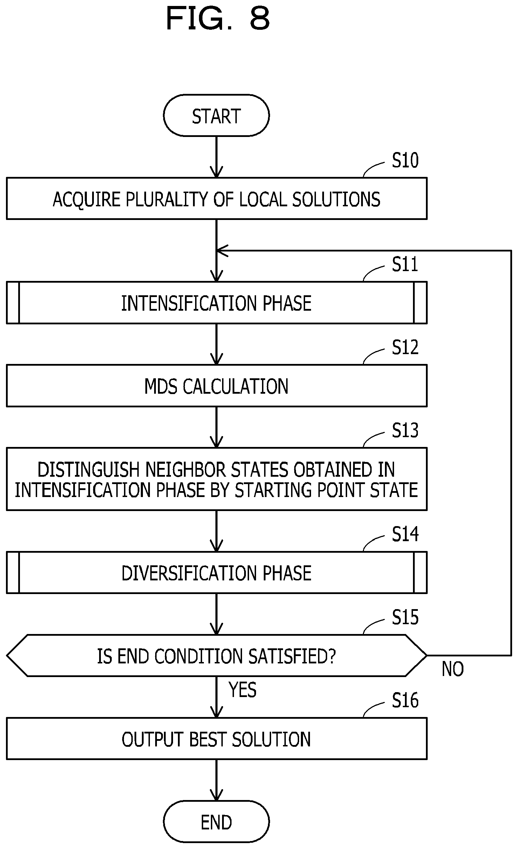

FIG. 8 is a flowchart illustrating an entire control example of the information processing system.

(S10) The control unit 130 uses the sub-search units 211, 212, 213, and the like in parallel to search for a solution to the combinatorial optimization problem, by the SA method or the replica exchange method from different initial states. Each of the sub-search units 211, 212, 213, and the like outputs a solution having the smallest energy value obtained by the search, for example, a local solution, to the information processing apparatus 100. The state acquisition unit 140 acquires a plurality of local solutions output by the sub-search units 211, 212, 213, and the like. Each of the plurality of local solutions is an initial starting point state in the intensification phase.

(S11) The control unit 130 executes the process of the intensification phase. In the intensification phase, neighbor states of the starting point state are sampled. The state acquisition unit 140 acquires the neighbor states, and records the acquired neighbor states in the neighbor state table 121 in association with the starting point state. The details of the intensification phase will be described later.

(S12) The control unit 130 executes MDS calculation based on the plurality of starting point states and the neighbor state groups sampled for each of the plurality of starting point states. The control unit 130 executes the MDS calculation to map the plurality of starting point states and the plurality of sampled neighbor states to, for example, the coordinate system 50 while maintaining the distance representing the similarity degree between the states.

(S13) The control unit 130 distinguishes the neighbor states obtained in the intensification phase by the starting point state. For example, based on the neighbor state table 121, the control unit 130 specifies a starting point state and a coordinate group corresponding to the starting point state in the coordinate system 50, for each starting point state.

(S14) The control unit 130 executes the process of the diversification phase. In the diversification phase, a new starting point state in the next intensification phase is generated. The details of the diversification phase will be described later.

(S15) The control unit 130 determines whether or not a predetermined end condition is satisfied. In a case where the end condition is satisfied, the control unit 130 proceeds to the process in step S16. In a case where the end condition is not satisfied, the control unit 130 proceeds to the process in step S11. The end condition is, for example, that the procedure of steps S11 to S14 is executed a certain number of times, or that a certain period of time has elapsed from the start of the entire control.

(S16) The control unit 130 outputs the best solution. For example, the control unit 130 outputs, as a final solution, the best state among the states acquired in the process of the overall control, for example, the state that minimizes the value of the energy function. For example, the control unit 130 may cause the display 111 to display an image representing the solution, or may transmit information on the solution to another computer via the network 40. The process of the entire control is ended.

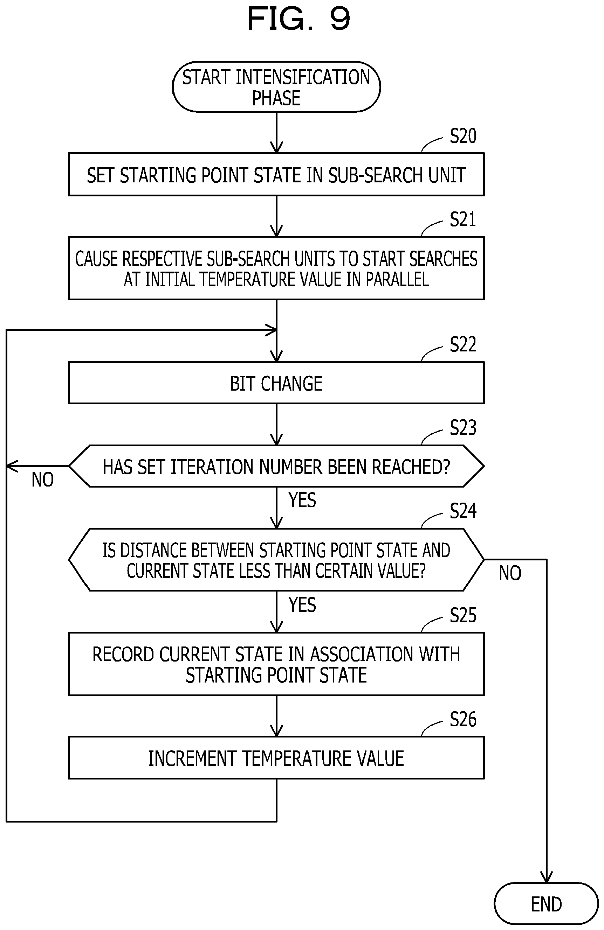

FIG. 9 is a flowchart illustrating an example of the intensification phase.

The intensification phase corresponds to step S11.

(S20) The control unit 130 sets different starting point states in the sub-search units 211, 212, 213, and the like, respectively.

(S21) The control unit 130 causes the respective sub-search units to start searches at the initial temperature value in parallel. The initial temperature value is, for example, the minimum temperature value that may be taken as the temperature value. However, a temperature value larger than the minimum temperature value may be set as the initial temperature value.

(S22) Each of the sub-search units 211, 212, 213, and the like executes a bit change for one bit based on Equation (6) for the state currently being held, by using the current temperature value. For example, the sub-search unit 211 may determine whether to allow a change in each bit, for example, a change in the value of each state variable, based on Equation (6), may randomly select one bit of which the change is allowed, using a random number, and may execute a bit change for one bit for the selected bit. The sub-search units 212, 213, and the like also execute the bit change in the same manner as the sub-search unit 211.

(S23) The sub-search units 211, 212, 213, and the like determine whether or not an iteration number set in advance by the control unit 130 is reached. In a case where the set iteration number is reached, the sub-search units 211, 212, 213, and the like output the current state to the information processing apparatus 100, and cause the process to proceed to step S24. In a case where the set iteration number is not reached, the sub-search units 211, 212, 213, and the like cause the process to proceed to step S22. The iteration number corresponds to the number of executions of step S22 at the current temperature value.

(S24) The control unit 130 determines whether or not the distance between a starting point state and a current state is less than a certain value, for each set of the starting point state and the current state corresponding to the starting point state. In a case where the distance between the starting point state and the current state is less than the certain value, the process proceeds to step S25 for the corresponding set. In a case where the distance between the starting point state and the current state is equal to or greater than the certain value, the current state obtained this time from the corresponding sub-search unit for the corresponding set is discarded, and the process of the intensification phase of the corresponding sub-search unit is ended. The sub-search unit of which the intensification phase is ended waits until the intensification phases of the other sub-search units are completed. The distance between the starting point state and the current state is evaluated by, for example, the Hamming distance. The certain value used for the determination is set in advance in the information processing apparatus 100 by the user.

(S25) The control unit 130 records the current state obtained this time from the corresponding sub-search unit in the item of the neighbor state in the neighbor state table 121 in association with the starting point state.

(S26) The control unit 130 increments the temperature value of the corresponding sub-search unit. For example, the control unit 130 increases the temperature value used for the search by the corresponding sub-search unit. The increase width of the temperature value is set in advance in the information processing apparatus 100 by the user. The increase width of the temperature value may be a fixed width, or may be gradually increased with a logarithmic width such as 0.1, 1, 10, 100, 1000, and the like. The control unit 130 proceeds to the process of step S22.

In this way, neighbor states of the starting point state are sampled.

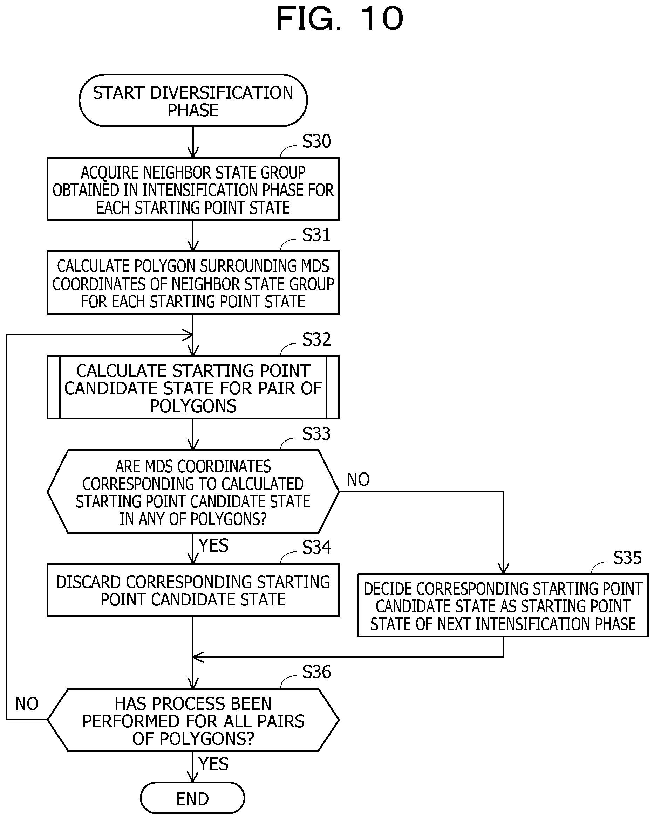

FIG. 10 is a flowchart illustrating an example of the diversification phase.

The diversification phase corresponds to step S14.

(S30) The control unit 130 acquires the neighbor state group obtained in the intensification phase for each starting point state.

(S31) The control unit 130 calculates a polygon surrounding the MDS coordinates of the starting point state and the neighbor state group, for each starting point state. The polygon may be called a minimum bounding polygon or a minimum bounding rectangle.

(S32) The control unit 130 calculates a starting point candidate state for a pair of polygons. The details of the process of calculating a starting point candidate state will be described later.

(S33) The control unit 130 determines whether the MDS coordinates corresponding to the calculated starting point candidate state are in any of the polygons obtained in step S31. In a case where the MDS coordinates are in any of the polygons, the control unit 130 proceeds to the process of step S34. In a case where the MDS coordinates are not in any of the polygons, the control unit 130 proceeds to the process of step S35.

(S34) The control unit 130 discards the corresponding starting point candidate state. The control unit 130 proceeds to the process of step S36.

(S35) The control unit 130 decides the corresponding starting point candidate state as a starting point state of the next intensification phase. The control unit 130 proceeds to the process of step S36.

(S36) The control unit 130 determines whether or not the process of step S32 has been performed for all the pairs of polygons. In a case where the process has been performed for all the pairs of polygons, the control unit 130 ends the process of the diversification phase. In a case where the process has not been performed for all the pairs of polygons, the control unit 130 proceeds to the process of step S32.

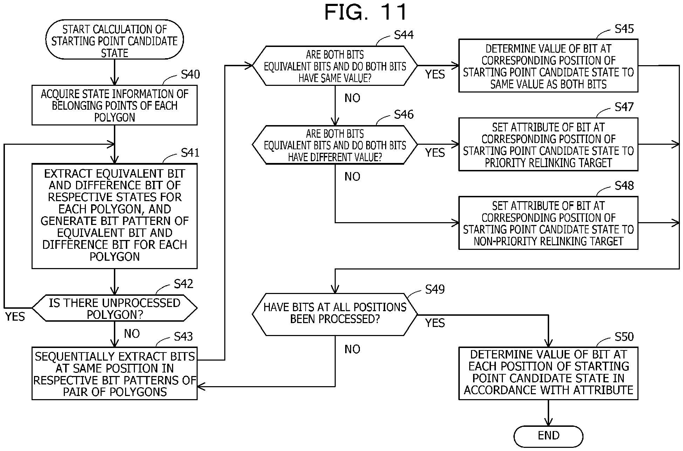

FIG. 11 is a flowchart illustrating a calculation example of the starting point candidate state.

The calculation of the starting point candidate state corresponds to step S32.

(S40) The control unit 130 acquires state information of belonging points of each polygon. The polygons from which the state information is to be acquired are two polygons used to calculate the starting point candidate state.

(S41) The control unit 130 extracts the equivalent bit and the difference bit of respective states corresponding to the polygon, for each polygon, and generates the bit pattern of the equivalent bit and the difference bit for each polygon. The method illustrated in FIG. 7 may be used for extracting the equivalent bit and the difference bit and generating the bit pattern.

(S42) The control unit 130 determines whether there is a polygon for which the process of step S41 has not been performed. In a case where there is a polygon for which the process has not been performed, the control unit 130 proceeds to the process of step S41. In a case where there is no polygon for which the process has not been performed, the control unit 130 proceeds to the process of step S43. The process of step S41 may be executed one time for each polygon. For this reason, in a case where the bit pattern has been generated for the polygon to be calculated for the starting point candidate state, step S41 may be skipped for the polygon.

(S43) The control unit 130 sequentially extracts bits at the same position in respective bit patterns of the pair of polygons.

(S44) The control unit 130 determines whether or not both the bits are equivalent bits and have the same value. In a case where both the bits are equivalent bits and have the same value, the control unit 130 proceeds to the process of step S45. In a case where both the bits are not equivalent bits or do not have the same value, the control unit 130 proceeds to the process of step S46.

(S45) The control unit 130 sets the attribute of the value of the bit at the corresponding position of the starting point candidate state to "keep", and determines the value of the bit to be the same value as both the bits at the same position in the respective bit patterns. The control unit 130 proceeds to the process of step S49.

(S46) The control unit 130 determines whether or not both the bits are equivalent bits and have different values. In a case where both the bits are equivalent bits and have different values, the control unit 130 proceeds to the process of step S47. Otherwise, the control unit 130 proceeds to the process of step S48.

(S47) The control unit 130 sets the attribute of the bit at the corresponding position of the starting point candidate state to the priority relinking target. The control unit 130 proceeds to the process of step S49.

(S48) The control unit 130 sets the attribute of the bit at the corresponding position of the starting point candidate state to the non-priority relinking target. The control unit 130 proceeds to the process of step S49.

(S49) The control unit 130 determines whether or not the bits at all the positions have been processed. In a case where the bits at all the positions have been processed, the control unit 130 proceeds to the process of step S50. In a case where the bits at all the positions have not been processed, the control unit 130 proceeds to the process of step S43.

(S50) The control unit 130 determines the value of the bit at each position of the starting point candidate state in accordance with the attribute of the corresponding bit. Some of the bits of the starting point candidate state may have already been determined to be 1 or 0 in step S45. As exemplified in FIG. 7, the control unit 130 sets 1 and 0 to be equal for the plurality of bits as the priority relinking target. However, in a case where there is only one bit as the priority relinking target, 1 or 0 may be randomly set. The control unit 130 randomly sets 1 or 0 for the bit as the non-priority relinking target. The control unit 130 ends the process of calculating the starting point candidate state.

In this manner, the starting point candidate state may be efficiently generated.

As described above, with the information processing apparatus 100 of the second embodiment, the possibility of reaching an optimal solution may be increased. The solution may be efficiently searched for by focusing on the unsearched part among the entire search space, and the possibility of obtaining the optimal solution in a short time may be increased. The solution performance for the combinatorial optimization problem may be improved.

For example, according to the procedure of the above-described diversification phase, "the center of a polygon corresponding to an unsearched part" is easily targeted as the next starting point state. The state of "the center of the polygon corresponding to the unsearched part" is a convenient expression, and the state means a state of which the distance evaluated by a predetermined scale such as the Hamming distance is appropriately away from each searched part of the entire search space. This may reduce the possibility that the searched state is redundantly searched, and may further increase the efficiency of searching for a solution. This further increases the possibility of obtaining an optimal solution in a short time.

In an optimization solver such as the search unit 210 using a metaheuristic method such as the SA method or the replica exchange method, a search space of a solution is searched on a neighborhood basis when solving the combinatorial optimization problem. However, it is difficult to reach an optimal solution depending on the type of problem to be solved. Examples of such a problem include a secondary allocation problem and a knapsack problem.

The reason why it is difficult to reach the optimal solution is, for example, that there is a specific variable represented by a specific bit or a specific bit set that is easily changed at a relatively high temperature value but is hardly changed at a relatively low temperature value in the SA method or the replica exchange method. On the other hand, since all the bits are easily changed at a relatively high temperature value, it is difficult for the specific bit or the specific bit set to be the value of the optimal solution. Therefore, it is easy for the search unit to be stuck at the local solution, and thus it may be difficult to reach the optimal solution.

The information processing apparatus 100 may increase the possibility of quickly reaching the optimal solution by causing the search unit 210 to perform a search by focusing on a section that is difficult to be searched only by the first search method such as the SA method or the replica exchange method.

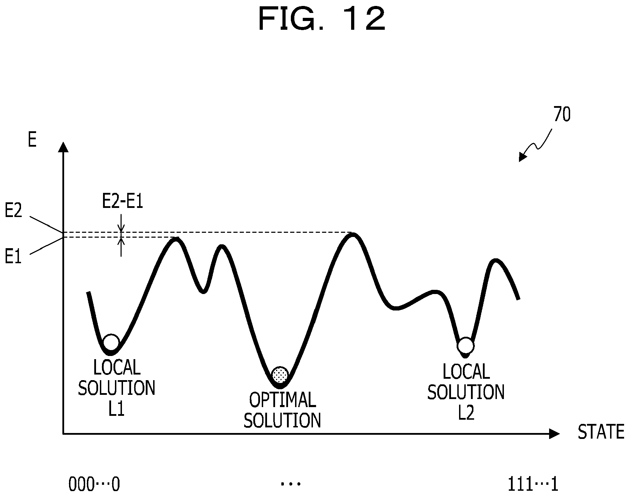

FIG. 12 illustrates an example of the energy values of the states in the neighborhood of the local solution.

A graph 70 illustrates the energy value with respect to the state, in which the horizontal axis indicates the state and the vertical axis indicates an energy value E. However, in the graph 70, each state in the search space is expressed in one dimension for convenience.

As described above, in the SA method or the replica exchange method, it may be easy for the search unit to be stuck at local solutions L1 and L2. A difference between an energy value E1 and an energy value E2 may be extremely small, the energy value E1 being a relatively high energy barrier in the vicinity of the local solution L1, the energy value E2 being a relatively high energy barrier in the vicinity of the local solution L2. In this case, after reaching the local solution L1 or the local solution L2, in order to escape from the reached local solution L1 or local solution L2 and reach an optimal solution, it is necessary to set the temperature value extremely precisely, and it is difficult to reach the optimal solution.

On the other hand, with the information processing apparatus 100, for example, re-search may be performed by specifying the neighbor state group of each of the local solutions L1 and L2 in the intensification phase, and by obtaining the next starting point state that is appropriately away from the specified neighbor state group in the diversification phase. Therefore, it is possible to efficiently perform the search while avoiding the neighborhood of the local solutions L1 and L2, and it is possible to reach the optimal solution more quickly.

As the first search method used by each of the sub-search units 211, 212, 213, and the like, the QA method and the SQA method are considered in addition to the SA method and the replica exchange method exemplified above.

In a case where the QA method or the SQA method is used as the first search method for obtaining a local solution, the coefficient $\Gamma(t)$ representing the strength of the influence of the transverse magnetic field is used as the external parameter as described above. In this case, in the second search method corresponding to the intensification phase, it is considered to perform the search for the neighbor states by gradually increasing the value of the coefficient $\Gamma(t)$ included in the Hamiltonian obtained by formulating the combinatorial optimization problem, from a relatively small value (for example, 0) over time.

In summary, the information processing apparatus 100 of the second embodiment has, for example, the following functions.

The control unit 130 sets the first state and the second state in the search unit 210. The control unit 130 causes the search unit 210 to execute a search which uses each of the first state and the second state as the starting point and which changes the value of a predetermined external parameter that affects an increase or decrease in the value of the objective function, in a direction that promotes an increase in the value of the objective function. The state acquisition unit 140 acquires the first state group obtained based on the first state and the second state group obtained based on the second state in the search process. The control unit 130 determines the third state among the unsearched states, based on the first state group and the second state group. The control unit 130 causes the search unit 210 to execute a search by using the third state as the starting point.

Thus, the possibility of reaching an optimal solution may be increased. The solution may be efficiently searched for by focusing on the unsearched part among the entire search space, and the possibility of obtaining the optimal solution in a short time may be increased. The solution performance for the combinatorial optimization problem may be improved.

For example, in a case where a local solution to be obtained before the re-search is first performed is obtained by the SA method or the replica exchange method, the external parameter is a parameter indicating the temperature value. In a case where the local solution is obtained by the QA method or the SQA method, the external parameter is a parameter indicating the strength of the influence of the transverse magnetic field on the objective function.

In the intensification phase, states in the neighborhood of the state as the starting point may be appropriately sampled by gradually increasing the temperature value or the value of the external parameter indicating the strength of the influence of the transverse magnetic field over time.

In the search using each of the first state and the second state as the starting point, the control unit 130 increases the value of the external parameter each time the state is changed a predetermined number of times by the search unit 210 or each time a predetermined period elapses.

The states in the neighborhood of the state as the starting point may be appropriately sampled.

In the search using the first state as the starting point, when the distance between the state obtained by the search unit 210 and the first state exceeds a certain value, the control unit 130 ends the search based on the first state. In the search using the second state as the starting point, when the distance between the state obtained by the search unit 210 and the second state exceeds a certain value, the control unit 130 ends the search based on the second state. The distance may be the Hamming distance as described above, or may be a distance evaluated by another predetermined scale.

The states in the neighborhood of the state as the starting point may be appropriately sampled.

For example, each of the first state and the second state is a local solution obtained by the search unit 210 executing a search performed by changing the value of the external parameter in a direction of suppressing an increase in the value of the objective function. Changing the value of the external parameter in the direction of suppressing the increase in the value of the objective function is, for example, gradually decreasing the value of the external parameter over time.

For example, in the first re-search, states in the neighborhood of the local solution may be specified, and the search space in the neighborhood of the local solution may be excluded from extraction candidates for the state as the next starting point. The possibility that the neighborhood of the local solution is re-searched may be reduced, and a solution may be efficiently searched for.

In the diversification phase, the control unit 130 generates the map information indicating the relationships between the states included in the plurality of state groups sampled in the intensification phase. The map information includes, for example, information on the coordinates corresponding to each state in the coordinate system 50. The control unit 130 determines the third state based on the correspondence relationship between the first state and the first state group, the correspondence relationship between the second state and the second state group, and the map information.

Thus, the process of extracting a state as a new starting point from the unsearched part of the entire search space.

The control unit 130 associates each of the plurality of coordinates in the map information with the first state and the second state, based on the correspondence relationship between the first state and the first state group and the correspondence relationship between the second state and the second state group. The control unit 130 specifies a first figure and a second figure including the coordinate groups respectively corresponding to the first state and the second state, and determines the state corresponding to the coordinates outside the first figure and the second figure as the third state.

Thus, the state as the new starting point may be appropriately extracted from the unsearched part of the entire search space.

The control unit 130 specifies a first pattern of the value of the state variable of each state belonging to the first state group by comparing each state belonging to the first state group with the corresponding state variable. The control unit 130 specifies a second pattern of the value of the state variable of each state belonging to the second state group by comparing each state belonging to the second state group with the corresponding state variable. The bit patterns 61 and 62 described above are examples of first and second patterns. The control unit 130 generates a candidate state that is a candidate for the third state based on the first pattern and the second pattern, and determines the candidate state as the third state in a case where the coordinates in the map information, which correspond to the candidate state, are coordinates outside the first figure and the second figure.

Thus, the state as the new starting point may be appropriately extracted from the unsearched part of the entire search space.

Each of the first pattern and the second pattern indicates a state variable that remains unchanged at the first value or the second value and a state variable of which the value is changed.

The control unit 130 sets the state variable of the candidate state corresponding to the state variable which has the same value in both the first pattern and the second pattern and remains unchanged at the same value, to the same value. The control unit 130 sets the first value and the second value to one or more state variables of the candidate states corresponding to one or more state variables in which one of the first pattern and the second pattern remains unchanged at the first value and the other remains unchanged at the second value, such that the difference between the number of the first values and the number of the second values among the one or more state variables is decreased. The control unit 130 randomly sets the first value or the second value to the state variable of the candidate state corresponding to the state variable of which the value is changed in both the first pattern and the second pattern.

Thus, the candidate state that is appropriately away from the searched part of the entire search space may be generated. Therefore, by using the candidate state as the starting point, the possibility that the searched part in the entire search space is redundantly searched may be reduced, and the search may be efficiently performed.

For example, the number of dimensions representing the coordinates of the map information is smaller than the number of the plurality of state variables.

Thus, based on the map information, the process of determining the state as the next starting point from the unsearched part of the entire search space may be easily performed with a relatively small amount of calculation. For example, the number of the plurality of state variables may be 1024, 8192, or the like. The number of dimensions of the map information may be 2 or more.

The search unit 210 includes a plurality of sub-search units (for example, sub-search units 211, 212, 213, and the like) each of which searches for a solution. The search unit 210 causes the plurality of sub-search units to execute searches respectively using the first state and the second state as the starting point, in parallel.

Thus, the speed of the search may be increased as compared with a case where the solution search is serially performed by using one sub-search unit. However, the search unit 210 may serially search for a solution by using one sub-search unit.

The control unit 130 outputs, as the final solution, the state that minimizes the value of the objective function among the states obtained by the search unit 210.

Thus, the best solution obtained in the search process may be appropriately acquired as the final solution.

It is possible to realize the information processing of the first embodiment by causing the processing unit 12 to execute a program. The information processing of the second embodiment may be realized by causing the CPU 101 to execute a program. The program may be recorded in the computer-readable recording medium 113.

For example, the program may be circulated by distributing the recording medium 113 in which the program is recorded. The program may be stored in another computer, and the program may be distributed through a network. For example, the computer may store (install), in a storage device such as the RAM 102 or the HDD 103, the program recorded in the recording medium 113 or the program received from the other computer, and may read the program from the storage device to execute the program.

[Reference Signs List]

1: INFORMATION PROCESSING SYSTEM
10: INFORMATION PROCESSING APPARATUS
11: COMMUNICATION UNIT
12: PROCESSING UNIT
20: SEARCH UNIT
30: MAP INFORMATION
R1, R2, R3: FIGURE
a0 to a5, b0 to b4, c0 to c3, d0, e0, f0: COORDINATES

[Citation List]

[Patent Literature]

Japanese Laid-open Patent Publication No. 62-61101.
Japanese Laid-open Patent Publication No. 2006-293478.

**Claims**

1. An information processing apparatus comprising:

   a communication unit configured to communicate with a search unit, the search unit being configured to search for a solution that minimizes a value of an objective function by changing states represented by values of a plurality of state variables included in the objective function; and
   a processing unit configured to perform processing, the processing including:

   causing the search unit to execute the search by using each of a first state and a second state as a starting point, the search being configured to change a value of a predetermined external parameter affecting an increase or decrease in the value of the objective function in a direction of promoting an increase in the value of the objective function;
   acquiring a first state group and a second state group from the search unit via the communication unit, the first state group being a state group obtained by the search unit using the first state, the second state group being a state group obtained by the search unit using the second state;
determining a third state among unsearched states by using the first state group and the second state group; and
causing the search unit to execute the search by using the third state as the starting point.

2. The information processing apparatus according to claim 1,
wherein the external parameter is a parameter indicating a temperature value or a parameter indicating strength of influence of a transverse magnetic field on the objective function.

3. The information processing apparatus according to claim 1,
wherein in the search using each of the first state and the second state as the starting point, the processing unit changes the value of the external parameter each time the state is changed a predetermined number of times by the search unit or each time a predetermined period elapses.

4. The information processing apparatus according to claim 1,
wherein in the search using the first state as the starting point, the processing unit ends the search based on the first state when a distance between the state obtained by the search unit and the first state exceeds a certain value, and in the search using the second state as the starting point, the processing unit ends the search based on the second state when a distance between the state obtained by the search unit and the second state exceeds the certain value.

5. The information processing apparatus according to claim 1,
wherein each of the first state and the second state is a local solution obtained by the search unit executing the search performed by changing the value of the external parameter in a direction of suppressing an increase in the value of the objective function.

6. The information processing apparatus according to claim 1,
wherein the processing unit generates map information indicating a relationship between states included in the first state group and the second state group, and determines the third state based on a correspondence relationship between the first state and the first state group, a correspondence relationship between the second state and the second state group, and the map information.

7. The information processing apparatus according to claim 6,
wherein the map information includes a plurality of coordinates corresponding to a plurality of the states included in the first state group and the second state group, and
the processing unit associates each of the plurality of coordinates with the first state and the second state based on each of the correspondence relationship between the first state and the first state group and the correspondence relationship between the second state and the second state group, specifies a first figure and a second figure including coordinate groups respectively corresponding to the first state and the second state, and determines the state corresponding to the coordinates outside the first figure and the second figure as the third state.

8. The information processing apparatus according to claim 7,
wherein the processing unit
specifies a first pattern of the value of the state variable of each state belonging to the first state group by comparing each state belonging to the first state group with the corresponding state variable,
specifies a second pattern of the value of the state variable of each state belonging to the second state group by comparing each state belonging to the second state group with the corresponding state variable, and
generates a candidate state that is a candidate for the third state based on the first pattern and the second pattern, and determines the candidate state as the third state in a case where the coordinates in the map information, which correspond to the candidate state, are coordinates outside the first figure and the second figure.

9. The information processing apparatus according to claim 8,
wherein each of the first pattern and the second pattern indicates a state variable that remains unchanged at a first value or a second value and a state variable of which the value is changed, and
the processing unit
sets the state variable of the candidate state corresponding to the state variable which has the same value in both the first pattern and the second pattern and remains unchanged at the same value, to the same value,
sets the first value and the second value to one or more state variables of the candidate states corresponding to one or more state variables in which one of the first pattern and the second pattern remains unchanged at the first value and the other remains unchanged at the second value, such that a difference between the number of the first values and the number of the second values among the one or more state variables is decreased, and randomly sets the first value or the second value to the state variable of the candidate state corresponding to the state variable of which the value is changed in both the first pattern and the second pattern.

10. The information processing apparatus according to claim 7,
wherein the number of dimensions representing coordinates of the map information is smaller than the number of the plurality of state variables.

11. The information processing apparatus according to claim 1,
wherein the search unit includes a plurality of sub-search units each of which performs the search, and causes the plurality of sub-search units to execute the searches respectively using the first state and the second state as the starting point, in parallel.

12. The information processing apparatus according to claim 1,
wherein the processing unit outputs, as the solution, the state that minimizes the value of the objective function among the states obtained by the search unit.

13. An information processing method causing a computer to execute
setting a first state and a second state in a search unit that searches for a solution that minimizes a value of an objective function by changing states represented by values of a plurality of state variables included in the objective function;
causing the search unit to execute the search by using each of a first state and a second state as a starting point, the search being configured to change a value of a predetermined external parameter affecting an increase or decrease in the value of the objective function in a direction of promoting an increase in the value of the objective function;
acquiring a first state group and a second state group from the search unit, the first state group being a state group obtained by the search unit using the first state, the second state group being a state group obtained by the search unit using the second state;
determining a third state among unsearched states by using the first state group and the second state group; and
causing the search unit to execute the search by using the third state as the starting point.

14. A program comprising instructions which, when the program is executed by a computer, cause the computer to perform processing, the processing comprising:

setting a first state and a second state in a search unit that searches for a solution that minimizes a value of an objective function by changing states represented by values of a plurality of state variables included in the objective function;
causing the search unit to execute the search by using each of a first state and a second state as a starting point, the search being configured to change a value of a predetermined external parameter affecting an increase or decrease in the value of the objective function in a direction of promoting an increase in the value of the objective function;
acquiring a first state group and a second state group from the search unit, the first state group being a state group obtained by the search unit using the first state, the second state group being a state group obtained by the search unit using the second state;
determining a third state among unsearched states by using the first state group and the second state group; and
causing the search unit to execute the search by using the third state as the starting point.

15. The information processing apparatus according to claim 1, further comprising:
one or more of search units, each of the one or more of search units being configured to operate as the search unit.

# FIG. 1

# FIG. 2

INFORMATION PROCESSING SYSTEM 2

INFORMATION PROCESSING APPARATUS 100

| | |
|---|---|
| CPU 101 | IMAGE SIGNAL PROCESSING UNIT 105 → 111 |
| RAM 102 | INPUT SIGNAL PROCESSING UNIT 106 → 112 |
| HDD 103 | MEDIUM READER 107 ← 113 |
| IO INTERFACE 104 | NIC 108 → NETWOR 40 |

OPTIMIZATION APPARATUS 200

SEARCH UNIT 210

# FIG. 3

# FIG. 4

| STORAGE UNIT | | 120 |
| --- | --- | --- |

| NEIGHBOR STATE TABLE | | 121 |
| --- | --- | --- |
| STARTING POINT | NEIGHBOR STATE | |
| start1 | start1_state1 | |
| | start1_state2 | |
| | ... | |
| start2 | start2_state1 | |
| | start2_state2 | |
| | ... | |
| ... | ... | |

# FIG. 5

50

B1
51
52

MDS Distance y

A1

C2
C1
54
C3
C4
53

MDS Distance x

| | |
|---|---|
| + | COORDINATES CORRESPONDING TO PREVIOUS STARTING POINT STATE |
| o | COORDINATES CORRESPONDING TO REACHED STATE |
| × | COORDINATES CORRESPONDING TO NEXT STARTING POINT STATE |

# FIG. 6

FIG. 7

| | bit0 | bit1 | bit2 | bit3 | bit4 | bit5 | bit6 | bit7 | bit8 | bit9 |
|---|---|---|---|---|---|---|---|---|---|---|
| POLYGON 51 | 1 | 0 | 1 | 0 | 1 | 0 | 1 | don't care | don't care | don't care |
| POLYGON 52 | 1 | 0 | 1 | don't care | 1 | 1 | 0 | 0 | don't care | don't care |
| ATTRIBUTE | KEEP | KEEP | KEEP | NON-PRIORITY | KEEP | PRIORITY | PRIORITY | NON-PRIORITY | NON-PRIORITY | NON-PRIORITY |
| STARTING POINT CANDIDATE STATE | 1 | 0 | 1 | random | 1 | 1 (0) | 0 (1) | random | random | random |

61

62

# FIG. 8

```
            ┌─────────┐
            │  START  │
            └─────────┘
                 │
                 ▼                          ┌─ S10
    ┌────────────────────────────────────┐
    │  ACQUIRE PLURALITY OF LOCAL SOLUTIONS │
    └────────────────────────────────────┘
                 │
                 ▼◄──────────────────────────────┐
                                            ┌─ S11│
    ┌────────────────────────────────────┐      │
    ││      INTENSIFICATION PHASE        ││      │
    └────────────────────────────────────┘      │
                 │                               │
                 ▼                          ┌─ S12│
    ┌────────────────────────────────────┐      │
    │          MDS CALCULATION           │      │
    └────────────────────────────────────┘      │
                 │                               │
                 ▼                          ┌─ S13│
    ┌────────────────────────────────────┐      │
    │  DISTINGUISH NEIGHBOR STATES OBTAINED IN │  │
    │ INTENSIFICATION PHASE BY STARTING POINT STATE │
    └────────────────────────────────────┘      │
                 │                               │
                 ▼                          ┌─ S14│
    ┌────────────────────────────────────┐      │
    ││      DIVERSIFICATION PHASE        ││      │
    └────────────────────────────────────┘      │
                 │                               │
                 ▼                          ┌─ S15│
    ◄────────────────────────────────────►      │
     \   IS END CONDITION SATISFIED?     /──────┘
      ◄──────────────────────────────────►  NO
                 │ YES
                 ▼                          ┌─ S16
    ┌────────────────────────────────────┐
    │         OUTPUT BEST SOLUTION        │
    └────────────────────────────────────┘
                 │
                 ▼
            ┌─────────┐
            │   END   │
            └─────────┘
```

# FIG. 9

START INTENSIFICATION PHASE

S20

SET STARTING POINT STATE IN SUB-SEARCH UNIT

S21

CAUSE RESPECTIVE SUB-SEARCH UNITS TO START SEARCHES AT INITIAL TEMPERATURE VALUE IN PARALLEL

S22

BIT CHANGE

S23

HAS SET ITERATION NUMBER BEEN REACHED? → NO

YES

S24

IS DISTANCE BETWEEN STARTING POINT STATE AND CURRENT STATE LESS THAN CERTAIN VALUE? → NO

YES

S25

RECORD CURRENT STATE IN ASSOCIATION WITH STARTING POINT STATE

S26

INCREMENT TEMPERATURE VALUE

END

# FIG. 10

START DIVERSIFICATION PHASE

S30
ACQUIRE NEIGHBOR STATE GROUP OBTAINED IN INTENSIFICATION PHASE FOR EACH STARTING POINT STATE

S31
CALCULATE POLYGON SURROUNDING MDS COORDINATES OF NEIGHBOR STATE GROUP FOR EACH STARTING POINT STATE

S32
CALCULATE STARTING POINT CANDIDATE STATE FOR PAIR OF POLYGONS

S33
ARE MDS COORDINATES CORRESPONDING TO CALCULATED STARTING POINT CANDIDATE STATE IN ANY OF POLYGONS?

NO

YES

S34
DISCARD CORRESPONDING STARTING POINT CANDIDATE STATE

S35
DECIDE CORRESPONDING STARTING POINT CANDIDATE STATE AS STARTING POINT STATE OF NEXT INTENSIFICATION PHASE

S36
HAS PROCESS BEEN PERFORMED FOR ALL PAIRS OF POLYGONS?

NO

YES

END

## FIG. 11

START CALCULATION OF STARTING POINT CANDIDATE STATE

S40
ACQUIRE STATE INFORMATION OF BELONGING POINTS OF EACH POLYGON

S41
EXTRACT EQUIVALENT BIT AND DIFFERENCE BIT OF RESPECTIVE STATES FOR EACH POLYGON, AND GENERATE BIT PATTERN OF EQUIVALENT BIT AND DIFFERENCE BIT FOR EACH POLYGON

S42
IS THERE UNPROCESSED POLYGON?

YES

NO

S43
SEQUENTIALLY EXTRACT BITS AT SAME POSITION IN RESPECTIVE BIT PATTERNS OF PAIR OF POLYGONS

S44
ARE BOTH BITS EQUIVALENT BITS AND DO BOTH BITS HAVE SAME VALUE?

YES

S45
DETERMINE VALUE OF BIT AT CORRESPONDING POSITION OF STARTING POINT CANDIDATE STATE TO SAME VALUE AS BOTH BITS

NO

S46
ARE BOTH BITS EQUIVALENT BITS AND DO BOTH BITS HAVE DIFFERENT VALUE?

YES

S47
SET ATTRIBUTE OF BIT AT CORRESPONDING POSITION OF STARTING POINT CANDIDATE STATE TO PRIORITY RELINKING TARGET

NO

S48
SET ATTRIBUTE OF BIT AT CORRESPONDING POSITION OF STARTING POINT CANDIDATE STATE TO NON-PRIORITY RELINKING TARGET

S49
HAVE BITS AT ALL POSITIONS BEEN PROCESSED?

YES

NO

S50
DETERMINE VALUE OF BIT AT EACH POSITION OF STARTING POINT CANDIDATE STATE IN ACCORDANCE WITH ATTRIBUTE

END

30

# FIG. 12

Europäisches
Patentamt

European
Patent Office

Office européen
des brevets

# EUROPEAN SEARCH REPORT

**Application Number**

EP 21 15 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DING-JUN CHEN ET AL: "Parallelizing simulated annealing algorithms based on high-performance computer", JOURNAL OF GLOBAL OPTIMIZATION, KLUWER ACADEMIC PUBLISHERS, DO, vol. 39, no. 2, 20 February 2007 (2007-02-20), pages 261-289, XP019529771, ISSN: 1573-2916, DOI: 10.1007/S10898-007-9138-0 * page 264 - page 266 * ----- | 1-15 | INV. G06F17/11 G06N5/00 |
| A | US 2019/278829 A1 (TAKATSU MOTOMU [JP]) 12 September 2019 (2019-09-12) * the whole document * ----- | 1-15 | |
| A | FERREIRO A. M. ET AL: "An efficient implementation of parallel simulated annealing algorithm in GPUs", JOURNAL OF GLOBAL OPTIMIZATION, vol. 57, no. 3, November 2013 (2013-11), pages 863-890, XP055821214, NL ISSN: 0925-5001, DOI: 10.1007/s10898-012-9979-z Retrieved from the Internet: URL:https://link.springer.com/content/pdf/10.1007/s10898-012-9979-z.pdf> * the whole document * ----- | 1-15 | |

TECHNICAL FIELDS
SEARCHED (IPC)

G06F
G06N

The present search report has been drawn up for all claims

| Place of search | Date of completion of the search | Examiner |
|---|---|---|
| Berlin | 8 July 2021 | Huguet Serra, G |

EPO FORM 1503 03.82 (P04C01)

## ANNEX TO THE EUROPEAN SEARCH REPORT
## ON EUROPEAN PATENT APPLICATION NO.

EP 21 15 9207

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2021

| Patent document cited in search report | | Publication date | Patent family member(s) | | Publication date |
|---|---|---|---|---|---|
| US 2019278829 | A1 | 12-09-2019 | JP 6465231 | B1 | 06-02-2019 |
| | | | JP 2019159637 | A | 19-09-2019 |
| | | | US 2019278829 | A1 | 12-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62061101 A

- JP 2006293478 A

**Non-patent literature cited in the description**

- **J.B.KRUSKAL.** Multidimensional scaling by optimizing goodness of fit to a nonmetric hypothesis. *Psychometrika,* 1964, vol. 29 (1), 1-27

- **M.MORITA ; H.OCHIAI ; K.TAMURA ; K.YASUDA.** Multipoint Search Combinatorial Optimization Method Based on Neighborhood Search Using Evaluation of Big Valley Structure. *2015 IEEE International Conference on Systems, Man, and Cybernetics,* 2015, 2835-2840